# EUROPÄISCHE PATENTSCHRIFT

(11) **EP 1 095 320 B1**
(45) Veröffentlichungstag und Bekanntmachung des Hinweises auf die Patenterteilung: **08.05.2002**
(21) Anmeldenummer: 99961980.2
(22) Anmeldetag: 13.07.1999
(51) Int. Cl.: G05B 19/05

(54) **STEUERUNGSSYSTEM MIT EINEM PERSONALCOMPUTER**
CONTROL SYSTEM WITH PERSONAL COMPUTER
SYSTEME DE COMMANDE AVEC ORDINATEUR INDIVIDUEL

(30) Priorität: 13.07.1998 DE 19831405
(43) Veröffentlichungstag der Anmeldung: 02.05.2001
(73) Patentinhaber: SIEMENS AKTIENGESELLSCHAFT, 80333 München (DE)
(72) Erfinder: BERMANN, Jürgen, D-76327 Pfinztal (DE); HAGEN, Jens, D-69190 Walldorf (DE)
(86) Internationale Anmeldenummer: DE9902143
(87) Internationale Veröffentlichungsnummer: WO0004429

(56) Entgegenhaltungen:
- DE-A- 3 808 135
- US-A- 5 404 288

## Beschreibung

Die Erfindung betrifft ein Steuerungssystem mit einem Personalcomputer nach dem Oberbegriff des Anspruchs 1.

Aus der DE-OS 38 08 135 ist bereits ein Steuerungssystem mit einem Personalcomputer (PC) bekannt, der aus den Einzelkomponenten PC-Prozessor, Datenspeicher, freiprogrammierbarer Speicher für ein Anwenderprogramm und einem Kommunikationsprozessor besteht, die über einen PC-Bus mit Adreß-, Datenund Steuerleitungen miteinander verbunden sind. Der Kommunikationsprozessor ist als eine in einen Slot des PC's einsteckbare Baugruppe ausgeführt.'Neben dem Kommunikationsprozessor, der in der Lage ist, selbständig eine zyklische Datenübertragung an einem Feldbus durchzuführen, ist auf der Steckbaugruppe eine speicherprogrammierbare Steuerung (SPS) realisiert. Die Schaltung ist dabei so ausgelegt, daß ein Programm zur Steuerung eines Prozesses über an den Feldbus angeschlossene Sensoren und/oder Aktuatoren wahlweise auf dem PC-Prozessor oder auf dem Prozessor der SPS ablaufen kann.

Die erste Betriebsart, bei welcher das.Steuerprogramm auf dem PC-Prozessor abläuft, hat den Vorteil, daß die Informationsverarbeitung und die Prozeßsteuerung nicht an eine SPS-Sprache, wie z. B. Koppelplan (KOP) oder Anweisungsliste (AWL), gebunden ist. Vielmehr kann die Programmierung in einer beliebigen Hochsprache, z. B. PASCAL, C oder BASIC, erfolgen. Dadurch werden die Benutzerfreundlichkeit des Systems verbessert und weitere Anwendungsmöglichkeiten erschlossen. Nachteilig bei dieser Betriebsart ist, daß der PC-Prozessor durch das Steuerprogramm und das Pollen der am Feldbus eingegangenen Daten zusätzlich belastet wird. Da der PC-Prozessor noch andere Aufgaben, z. B. Tastaturabfrage, Anzeigefunktionen, Auswertung und Visualisierung der Prozeßdaten, erfüllen muß, entsteht zwangsläufig ein Engpaß bei den zur Verfügung stehenden Ressourcen. Insbesondere bei der Steuerung eines zeitkritischen Prozesses, bei welcher die Prozeßdaten in sehr kurzen Zeitabständen abgefragt werden müssen, um zeitkritische Änderungen zu erfassen, steigt die Belastung des PC-Prozessors erheblich.

Die zweite Betriebsart, bei welcher eine speicherprogrammierbare Steuerung unabhängig vom PC-Prozessor das Steuerprogramm abarbeitet, hat den Vorteil, daß der Prozessor der speicherprogrammierbaren Steuerung nicht durch zusätzliche Aufgaben belastet wird und allein für die Steuerungsaufgaben vorgesehen ist. Andererseits ist der PC-Prozessor von den Steuerungsaufgaben befreit. Nachteilig dabei ist allerdings, daß das Steuerprogramm in einer Sprache, die für speicherprogrammierbare Steuerungen geeignet ist, erstellt werden muß.

Der Erfindung liegt die Aufgabe zugrunde, ein Steuerungssystem mit einem Personalcomputer zu schaffen, bei welchem der PC-Prozessor die Abarbeitung des Steuerprogramms übernimmt und durch die Steuerungsaufgabe in einem vergleichsweise geringeren Maße belastet wird.

Zur Lösung dieser Aufgabe weist das neue Steuerungssystem der eingangs genannten Art die im kennzeichnenden Teil des Anspruchs 1 angegebenen Merkmale auf. In den Unteransprüchen sind vorteilhafte Weiterbildungen des Steuerungssystems beschrieben.

Die Erfindung hat den Vorteil, daß Steuerprogramme, die für ein Steuerungssystem nach der ersten Betriebsart, bei welchem das Steuerprogramm auf dem PC-Prozessor abläuft, geschrieben wurden, ohne wesentliche Änderungen auf das neue Steuerungssystem übertragbar sind. Dabei wird der PC-Prozessor von dem Pollen der eingegangenen Prozeßdaten oder von dem Überwachen des Feldbuszyklus entlastet. Diese Aufgaben werden vorteilhaft von der Überwachungseinheit übernommen. Die Überwachungseinheit kann mit Vorteil durch eine parametrierbare Hardwareschaltung realisiert werden, aber auch eine Softwarelösung durch eine Erweiterung des Kommunikationsprozessorprogramms ist möglich. In jedem Fall wird eine schnelle Erkennung von Ereignissen, beispielsweise einer Änderung der Prozeßdaten, erreicht. Das Steuerprogramm wird in diesem Fall nur dann aktiv, wenn sich die Prozeßdaten wirklich geändert haben. In vorteilhafter Weise können die Bedingungen, deren Erfüllen durch die Überwachungseinheit geprüft wird, spezifisch für jeden Teilnehmer am Feldbus, z. B. Sensor oder Aktuator, vorgegeben werden. Bei dem neuen Steuerungsverfahren ist es somit möglich, die Teilnehmer flexibel einzustufen und eine skalierbare Belastung des PC-Prozessors zu erhalten. Die Belastungen des PC-Prozessors werden insgesamt gesenkt und der PC-Prozessor steht für andere Applikationen häufiger zur Verfügung. Dabei wird ein für die Funktion des Steuerungssystems wesentlicher Punkt weiterhin erfüllt, nämlich daß bei sich ändernden Prozeßdaten das Steuerungssystem bereits nach einer minimalen Verzögerungszeit reagiert.

Wenn die Überwachungseinheit den PC-Prozessor durch Erzeugen eines Interrupts zur Weiterverarbeitung eingegangener Daten veranlaßt, wird in vorteilhafter Weise ein bewährter Mechanismus zur Aktivierung des Steuerprogramms mit geringen Verzögerungszeiten verwendet.

Die Verarbeitung im Steuerprogramm kann vorteilhaft mit dem Feldbuszyklus synchronisiert werden, wenn das Erreichen eines vorbestimmten Zyklusereignisses als eine vorgebbare Bedingung bei der Überwachung der zyklischen Datenübertragung verwendet wird. Das ist insbesondere dann vorteilhaft anwendbar, wenn das vorbestimmte Zyklusereignis der Ablauf eines Zyklus ist oder wenn bei einer Abtastregelung eine konstante Abtastzeit gewünscht wird.

Eine schnelle Reaktion auf Fehler in den am Feldbus angeschlossenen Teilnehmern wird erreicht, wenn der Eingang einer Fehlermeldung durch die Überwachungseinheit geprüft wird.

Weiterhin können die eingegangenen Prozeßdaten auf Überschreiten eines vorgegebenen Wertebereichs geprüft werden, um ein schnelles Einleiten geeigneter Maßnahmen durch den PC-Prozessor zu gewährleisten.

Werden die eingegangenen Prozeßdaten durch den Kommunikationsprozessor jeweils in einem Speicher abgelegt, auf welchen der PC-Prozessor zugreifen kann, so steht für die Bearbeitung des Steuerprogramms wie auch für Visualisierungsaufgaben ständig ein aktuelles Prozeßabbild zur Verfügung. Der Speicher kann so ausgeführt werden, daß sowohl der PC-Prozessor als auch der Kommunikationsprozessor auf die abgelegten Daten zugreifen kann. Das hat den Vorteil, daß der Kommunikationsprozessor unabhängig von Zugriffen des PC-Prozessors auf Prozeßdaten den Feldbuszyklus abwickeln kann. Die Feldbuszykluszeit wird dann nicht durch die Zahl der Zugriffe des PC-Prozessors beeinflußt.

Vorteilhaft wird der PC-Prozessor nur bei Änderungen der Prozeßdaten zur Weiterverarbeitung der am Feldbus eingegangenen Daten durch das Steuerprogramm veranlaßt. Durch die Überwachungseinheit kann eine Abweichung eingegangener Daten von den im Speicher abgelegten Prozeßdaten als Änderung angezeigt werden. Das hat insbesondere bei Prozessen mit einer geringeren Dynamik den Vorteil, daß eine nicht erforderliche Belastung des PC-Prozessors vermieden wird.

Das neue Steuerungssystem bietet insbesondere Vorteile, wenn der Kommunikationsprozessor als Master an einem Feldbus mit zyklischer Datenübertragung nach Art des PROFIBUS DP betreibbar ist. Der Kommunikationsprozessor gibt dann als Master den Feldbuszyklus vor und hat die Funktion eines "Taktschlägers" bei der Erfassung der Prozeßdaten. Die Dauer eines Feldbuszyklus, die bei einer Regelung der Abtastzeit entspricht, ist unabhängig von anderen Teilnehmern, die am Feldbus als Slaves betrieben werden.

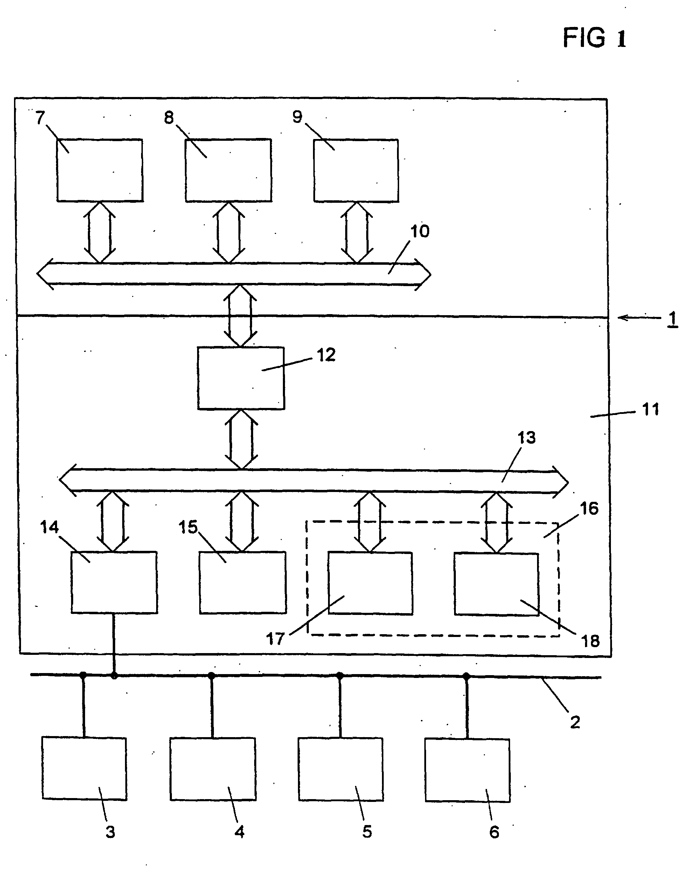

Anhand der Zeichnung, in der ein Ausführungsbeispiel der Erfindung dargestellt ist, werden im folgenden die Erfindung sowie Ausgestaltungen und Vorteile näher erläutert.

Die Figur zeigt einen Personalcomputer 1, der über einen Feldbus 2, hier ein PROFIBUS DP, mit Teilnehmern 3, 4, 5 und 6 verbunden ist. Der PROFIBUS DP arbeitet nach dem Master-Slave-Zugriffsverfahren. Slaves sind Teilnehmer am Bussystem, die nur dann Daten über den Bus senden können, wenn sie vom Master dazu aufgefordert werden. Master ist der Personalcomputer 1. Die Teilnehmer 3 und 4 sind Sensoren, beispielsweise ein Durchfluß- bzw. ein Füllstandsmeßumformer, die Teilnehmer 5 und 6 sind Aktuatoren, beispielsweise ein Zubzw. ein Ablaufventil an einem Tank, wobei z. B. dessen Befüllung als Prozeß geregelt werden soll. Der Feldbus 2 ist für zyklische Datenübertragung ausgelegt. Der Master, hier der Personalcomputer 1, ermöglicht eine streng zeitzyklische Übertragung der Nutzdaten zwischen Master und Slaves. D. h., unabhängig vom Zustand der Slaves am Bus wird der Feldbuszyklus möglichst konstantgehalten. Ein Datenaustausch zwischen dem Master 1 und einem Slave benötigt beim PROFIBUS DP weniger als 0,5 ms. Daraus ergibt sich für das gezeigte Ausführungsbeispiel ein Feldbuszyklus von weniger als 2 ms. Ein PC-Prozessor 7 müßte also, um sofort von Änderungen der Prozeßdaten zu erfahren, spätestens nach 0,5 ms am Feldbus 2 eingegangene Prozeßdaten überprüfen und eine Auswertung durchführen. Das würde aber eine erhebliche Belastung des PC-Prozessors darstellen, da mit einem Taskwechsel, beispielsweise von einem Visualisierungsprogramm zu dem Steuerprogramm, immer ein erheblicher Verwaltungsaufwand verbunden ist. Diese Belastung des PC-Prozessors wird bei dem in der Figur gezeigten Steuerungssystem vermindert.

Für das neue Steuerungssystem ist ein handelsüblicher Personalcomputer 1, insbesondere ein Industrie-PC, verwendbar, der zumindest einen PC-Prozessor 7, einen Datenspeicher 8 und einen Programmspeicher 9 aufweist. Über einen internen PCI-Bus 10, der Daten-, Steuer- und Adreßleitungen besitzt, sind die Komponenten miteinander verbunden. Zur Kommunikation am Feldbus 2 ist in den PC 1 eine Steckkarte 11 gesteckt, die an den PCI-Bus 10 angeschlossen ist. Über eine PCI-Busanschaltung 12-und einen internen Bus 13 kommuniziert der PC-Prozessor 7 mit den Komponenten der Steckkarte 11. Auf der Steckkarte 11 ist ein Kommunikationsprozessor 14 angeordnet, der nach einer entsprechenden Parametrierung durch den PC-Prozessor 7 selbständig eine zyklische Datenübertragung am Feldbus 2 durchführt. Der Kommunikationsprozessor 14 besteht im wesentlichen aus einem ASIC mit der Bezeichnung ASPC2 von Siemens, der bei Anlauf des Steuerungssystems durch verkettete Auftragsblöcke entsprechend der jeweiligen Konfiguration des Feldbusses 2 parametriert wird. Weiterhin ist ein Speicher 15 vorgesehen, in welchen die am Feldbus 2 eingegangenen Prozeßdaten abgelegt werden. Dieser Speicher 15 hält damit ein aktuelles Prozeßabbild, auf das durch den PC-Prozessor 7 jederzeit zugegriffen werden kann. Als Speicher 15 wird ein SSRAM-Baustein der Größe 32 k x 32 mit einer hier nicht näher dargestellten Bustreiberschaltung verwendet. Eine Überwachungseinheit 16 besteht aus einem kleinen RAM 17, der in den Adreßraum des PC-Prozessors 7 eingegliedert ist und daher von diesem direkt adressiert werden kann, sowie aus einem programmierbaren Logikbaustein 18, der entsprechend einer im RAM 17 abgelegten Parametrierung die zyklische Datenübertragung am Feldbus 2 und/oder am Feldbus eingegangene Daten überwacht. Als Logikbaustein 18 wird ein EPLD des Typs 7256 von Altera verwendet.

Bei Anlauf des Steuerprogramms im Programmspeicher 9 greift der PC-Prozessor 7 auf das RAM 17 zu und setzt dort die entsprechenden Bits, um die Funktion der Überwachungseinheit 16 in der gewünschten Weise zu bestimmen. Durch diese Parametrierung wird beispielsweise festgelegt, in welchen Fällen die Überwachungseinheit 16 einen Interrupt erzeugen soll, der über die PCI-Busanschaltung 12 und den PCI-Bus 10 an den PC-Prozessor 7 weitergeleitet wird. Damit wird festgelegt, bei welchen Ereignissen der PC-Prozessor 7 zur Weiterverarbeitung der am Feldbus 2 eingegangenen Daten durch das Steuerprogramm veranlaßt werden soll. Beispiele dafür sind:
- Alle Slaves wurden einmal angesprochen, d. h. ein Feldbuszyklus ist abgeschlossen,
- ein Slave am Feldbus liefert geänderte Prozeßdaten,
- ein Slave meldet eine Ausnahmesituation oder einen Fehler und/oder
- ein Slave liefert Prozeßdaten, die außerhalb eines vorgegebenen Wertebereichs liegen.

Durch die Parametrierung kann gesondert für jeden Slave am Feldbus 2 festgelegt werden, ob bei Änderungen der jeweiligen Prozeßdaten Interrupts zu generieren sind oder nicht.

Bei aktiver Prozeßsteuerung polit der Kommunikationsprozessor 14 als Master fortwährend die Teilnehmer 3 ... 6 am Feldbus 2, die als Slaves betrieben werden. Wenn durch den Kommunikationsprozessor 14 die Prozeßdaten eines Slaves eingelesen. wurden, will er sie in die Speicherzellen des Speichers 15 eintragen, die für die jeweiligen Prozeßdaten vorgesehen sind. Der Logikbaustein 18 der Überwachungseinheit 16 überprüft anhand der Adresse des Schreibzugriffs, ob bei einer Änderung der jeweiligen Prozeßdaten ein Interrupt erzeugt werden muß. Diese Überprüfung ist in einfacher Weise möglich, da die Prozeßdaten der einzelnen Slaves jeweils an festen Speicherplätzen innerhalb des Speichers 15 abgelegt sind. Soll ein Interrupt bei einer Änderung der jeweiligen Daten erzeugt werden, so vergleicht ein im Logikbaustein 18 realisierter Datenkomparator die durch den Kommunikationsprozessor 14 auf den Bus 13 gelegten Daten mit den früheren Prozeßdaten, die durch den Logikbaustein 18 zuvor aus dem Speicher 15 ausgelesen wurden. Wenn die vorgegebene Bedingung einer Datenänderung erfüllt ist, generiert der Logikbaustein 18 einen Interrupt, der zum PC-Prozessor 7 weitergeleitet wird, um diesen zur Weiterverarbeitung der am Feldbus eingegangenen Daten durch das Steuerprogramm zu veranlassen. Gleichzeitig wird der Schreibzugriff des Kommunikationsprozessors 14 auf den Speicher 15 durchgeführt und die früheren Prozeßdaten werden durch die neu am Feldbus 2 eingegangenen Daten überschrieben. Mit der Generierung eines Interrupts wird zusätzlich ein Flag mit der Bedeutung "für den aktuellen Datenbereich habe ich schon einen Interrupt generiert" innerhalb des Logikbausteins 18 gesetzt. Dieses Flag hat die Funktion, daß Interrupts nicht mehrfach ausgelöst werden, wenn sich an mehreren Stellen eines Datenblocks, der bei der zyklischen Datenübertragung von demselben Slave geliefert wird, Prozeßdaten geändert haben. Das Flag wird zurückgesetzt, wenn der Kommunikationsprozessor 14 auf Adressen im Speicher 15 zugreifen will, unter denen die Daten des im Feldbuszyklus folgenden Slaves abgelegt sind.

Da der Vergleich der aktuell eingegangenen Daten mit den früheren Prozeßdaten sowie die Interrupt-Generierung durch eine in Hardware realisierte Überwachungseinheit 16 durchgeführt wird, ist in vorteilhafter Weise eine sehr schnelle Reaktion des Steuerungssystems auf Änderungen der Prozeßdaten möglich.

Bei Lesezugriffen des Kommunikationsprozessors 14 auf den Speicher 15, d. h. wenn der Kommunikationsprozessor 14 zuvor durch den PC-Prozessor 7 berechnete und in den Speicher 15 geschriebene Prozeßdaten aus dem Speicher 15 auslesen und über den Feldbus 2 an einen der Aktuatoren 5 oder 6 ausgeben will, wird durch die Überwachungseinheit 16 kein Interrupt erzeugt.

## Patentansprüche

1. Steuerungssystem mit einem Personalcomputer (1), der zur Bearbeitung eines Steuerprogramms zumindest einen PC-Prozessor (7), einen Programmspeicher (9) und einen Datenspeicher (8) aufweist und der mit einem Kommunikationsprozessor (14) zur Anschaltung an einen Feldbus (2) versehen ist, an den Sensoren (3, 4) und/oder Aktuatoren (5, 6) zur Steuerung eines Prozesses anschließbar sind, wobei der Kommunikationsprozessor (14) in der Lage ist, selbständig eine zyklische Datenübertragung am Feldbus (2) durchzuführen, **dadurch gekennzeichnet, daß** eine Überwachungseinheit (16) vorgesehen ist, welche die zyklische Datenübertragung am Feldbus (2) und/oder am Feldbus eingegangene Daten überwacht und bei Erfüllen zumindest einer vorgebbaren Bedingung den PC-Prozessor (7) zur Weiterverarbeitung der am Feldbus (2) eingegangenen Daten durch das Steuerprogramm veranlaßt.

2. Steuerungssystem nach Anspruch 1, **dadurch gekennzeichnet, daß** die Überwachungseinheit (16) den PC-Prozessor (7) durch Erzeugen eines Interrupts zur Weiterverarbeitung eingegangener Daten veranlaßt.

3. Steuerungssystem nach einem der Ansprüche 1 oder 2, **dadurch gekennzeichnet, daß** eine vorgebbare Bedingung das Erreichen eines vorbestimmten Zyklusereignisses ist.

4. Steuerungssystem nach Anspruch 3, **dadurch gekennzeichnet, daß** das vorbestimmte Zyklusereignis der Ablauf eines Zyklus ist.

5. Steuerungssystem nach einem der vorhergehenden Ansprüche, **dadurch gekennzeichnet, daß** eine vorgebbare Bedingung der Eingang einer Fehlermeldung ist.

6. Steuerungssystem nach einem der vorhergehenden Ansprüche, **dadurch gekennzeichnet, daß** eine vorgebbare Bedingung das Überschreiten eines vorgegebenen Wertebereichs für eingegangene Daten ist.

7. Steuerungssystem nach einem der vorhergehenden Ansprüche, **dadurch gekennzeichnet, daß** ein Speicher (15) vorgesehen ist, in welchen am Feldbus (2) eingegangene Daten abspeicherbar sind.

8. Steuerungssystem nach Anspruch 7, **dadurch gekennzeichnet, daß** der Speicher (15) derart ausgeführt ist, daß sowohl der PC-Prozessor (7) als auch der Kommunikationsprozessor (14) auf die Daten zugreifen können.

9. Steuerungssystem nach Anspruch 7 oder 8, **dadurch gekennzeichnet, daß** eine vorgebbare Bedingung eine Abweichung eingegangener Daten von den im Speicher (15) abgelegten Daten ist.

10. Steuerungssystem nach einem der vorhergehenden Ansprüche, **dadurch gekennzeichnet, daß** der Kommunikationsprozessor (14) als Master an einem Feldbus (2) mit zyklischer Datenübertragung nach Art des PROFIBUS DP betreibbar ist.

## Claims

1. A control system with a personal computer (1) which, for the processing of a control program, comprises at least one PC processor (7), a program memory (9) and a data memory (8) and which is provided with a communications processor (14) for connection to a field bus (2) to which sensors (3, 4) and/or actuators (5, 6) for the control of a process can be connected, wherein the communications processor (14) is capable of independently performing a cyclic data transmission on the field bus (2), **characterised in that** a monitoring unit (16) is provided which monitors the cyclic data transmission on the field bus (2) and/or data received on the field bus and upon the fulfilment of at least one predeterminable condition, prompts the PC processor (7) to further process the data received on the field bus (2) by the control program.

2. A control system according to Claim 1, **characterised in that** the monitoring unit (16) prompts the PC processor (7) to further process received data by the generation of an interrupt.

3. A control system according to one of Claims 1 or 2, **characterised in that** a predeterminable condition is the attainment of a predefined cyclic event.

4. A control system according to Claim 3, **characterised in that** the predefined cyclic event is the completion of a cycle.

5. A control system according to one of the preceding claims, **characterised in that** a predeterminable condition is the reception of an error message.

6. A control system according to one of the preceding claims, **characterised in that** a predeterminable condition is the overshooting of a predefined value range for received data.

7. A control system according to one of the preceding claims, **characterised in that** a memory (15) is provided in which data received on the field bus (2) can be stored.

8. A control system according to Claim 7, **characterised in that** the memory (15) is designed such that both the PC processor (7) and the communications processor (14) can access the data.

9. A control system according to Claim 7 or 8, **characterised in that** a predeterminable condition is a deviation between received data and the data stored in the memory (15).

10. A control system according to one of the preceding claims, **characterised in that** the communications processor (14), as master, can be operated on a field bus (2) with cyclic data transmission in the manner of the PROFIBUS DP.

## Revendications

1. Système de commande comprenant un ordinateur (1) individuel, qui comporte pour le traitement d'un programme de commande au moins un processeur (7) de PC, une mémoire (9) de programme et une mémoire (8) de données et qui est pourvu d'un processeur (14) de communication destiné à être connecté à un bus (2) de champ, qui peuvent être connectés aux capteurs (3, 4) et/ou aux actionneurs (5, 6) en vue de la commande d'un processus, le processeur (14) de communication étant en mesure de réaliser de façon autonome une transmission cyclique de données au bus (2) de champ, **caractérisé en ce qu'**il est prévu une unité (16) de surveillance surveillant la transmission cyclique des données au bus (2) de champ et/ou les données parvenues au bus de champ et le programme de commande ordonnant au processeur (7) du PC de traiter les données parvenues au bus (2) de champ, au cas où au moins une condition, qui peut être spécifiée, est remplie.

2. Système de commande selon la revendication 1, **caractérisé en ce que** l'unité (16) de surveillance ordonne au processeur (7) du PC de traiter les données parvenues en générant une interruption.

3. Système de commande selon l'une des revendications 1 ou 2, **caractérisé en ce qu'**une condition, qui peut être spécifiée, est l'obtention d'un événement de cycle prédéterminé.

4. Système de commande selon la revendication 3, **caractérisé en ce que** l'événement de cycle prédéterminé est le déroulement d'un cycle.

5. Système de commande selon l'une des revendications précédentes, **caractérisé en ce qu'**une condition, qui peut être spécifiée, est qu'un message d'erreur est parvenu.

6. Système de commande selon l'une des revendications précédentes, **caractérisé en ce qu'**une condition, qui peut être spécifiée, est le dépassement d'un domaine de valeurs, qui peut être spécifié, pour des données parvenues.

7. Système de commande selon l'une des revendications précédentes, **caractérisé en ce qu'**une mémoire (15) est prévue, dans laquelle des données parvenues au bus (2) de champ sont mémorisables.

8. Système de commande selon la revendication 7, **caractérisé en ce que** la mémoire (15) est réalisée de telle sorte que le processeur (7) du PC et la processeur (14) de communication peuvent accéder aux données.

9. Système de commande selon la revendication 7 ou 8, **caractérisé en ce qu'**une condition, qui peut être spécifiée, est un écart entre des données parvenues et des données mémorisées dans la mémoire (15).

10. Système de commande, selon l'une des revendications précédentes, **caractérisé en ce qu'**on peut faire fonctionner le processeur (14) de communication en tant que maître dialoguant sur un bus (2) de champ avec transmission cyclique de données selon le type du PROFIBUS DP.
